# DEMANDE DE BREVET EUROPEEN

(11) **EP 2 238 829 A1**
(43) Date de publication de la demande: **13.10.2010**
(21) Numéro de dépôt: 10158489.4
(22) Date de dépôt: 30.03.2010
(51) Int. Cl.: A01K 39/06

(54) **Installation intéractive d'engraissement des palmipèdes**

(30) Priorité: 31.03.2009 FR 0901588
(71) Demandeur: Dussau Distribution Sas, 40320 Pecorade (FR); Dussau, Christian, 40320 Samadet (FR)
(72) Inventeur: Dussau, Christian, 40320, SAMADET (FR)
(74) Mandataire: Ravina, Bernard

(57) **Abrégé**

L'installation interactive d'engraissement des palmipèdes, comprenant un local d'élevage (1) avec moyens de climatisation (3) par ventilation et/ou chauffage et/ou refroidissement, dans lequel est formée au moins une aire d'élevage (10) prévue pour recevoir des palmipèdes à élever, ladite installation comportant au moins une machine distributrice (2) de nourriture pour palmipède à un embuc (23) de nourrissage prévu pour être intubé dans le jabot du palmipède à nourrir, caractérisée en ce qu'elle comprend des moyens d'identification des palmipèdes et des moyens pour l'évaluation de l'état physiologique et morphologique de chaque palmipède et de sa capacité à absorber une ration alimentaire et un système communiquant d'échange de ces informations entre les moyens d'évaluation et une unité de contrôle et de commande (4) apte à agir au moins sur la machine distributrice (2) pour interdire ou limiter la distribution la ration alimentaire à ce palmipède si son état physiologique ne lui permet pas d'être nourri ou complètement nourri.

## Description

### Domaine technique

La présente invention est du domaine des techniques et matériels utilisés pour l'élevage des palmipèdes, tels que canards et oies et concerne plus particulièrement leur nourrissage en vue de leur engraissement.

### Etat de la technique antérieure.

À ce jour, la production de foie gras est obtenue par gavage, opération consistant à suralimenter les palmipèdes en leur distribuant des quantités d'aliment qui sont, dans les grandes unités, uniformes pour l'ensemble des animaux et imposées par l'éleveur en fonction de son appréciation et de ses jugements subjectifs. Ce type de production suscite depuis quelques années une polémique relativement intense entre les éleveurs et leurs opposants, dont le thème central s'articule autour du « bien-être » animal et de la santé animale.

Les éleveurs argumentent que le gavage est en fait une amplification d'une prédisposition naturelle des palmipèdes, à des fins migratoires, à absorber des quantités importantes d'aliments afin de réaliser des réserves d'énergies stockées sous forme de graisse, en sous cutané et dans le foie par le développement d'un processus physiologique, appelé stéatose hépatique. La réversibilité de cet état leur permet de ne pas le considérer comme une pathologie.

En revanche, les opposants estiment que ce type de suralimentation, à dose imposée par l'homme, entraînant une stéatose hépatique est bien une pathologie car elle se traduit par une surmortalité comparée à celle d'animaux non gavés. Ils refusent aussi ce type de suralimentation en raison du fait qu'elle peut être une source de lésions physiques par blessure de jabot due à une extension trop importante et/ou trop brutale en liaison avec les capacités physiologiques d'élasticité du jabot. On ne peut contester une variabilité des capacités volumétriques des jabots des animaux tout comme une variabilité des prédispositions physiques et génétiques à produire plus ou moins de foie. Ces critères sont propres à chaque palmipède, et ne sont généralement pas pris en compte ou mal pris en compte dans les méthodes industrielles de gavage, ces dernières assurant le nourrissage d'une façon globale et subjective par la distribution d'une quantité uniforme de nourriture aux différents palmipèdes.

Si depuis plus de 16 ans, une étude approfondie des chiffres laisse apparaître un taux de surmortalité pendant la période de gavage, il est important de souligner que depuis ces 10 dernières années, la mortalité en gavage a été réduite de moitié. Les explications principales sont, la meilleure préparation des animaux en élevage appelé pré-gavage, l'amélioration génétique, l'amélioration des conditions d'ambiance en élevage par le contrôle de température et d'hygrométrie par la maîtrise des ventilations et des systèmes de refroidissement du genre « pad-cooling ».

Malgré ces résultats particulièrement probants, les opposants demandent l'étude de deux méthodes alternatives concernant soit le produit soit le nourrissage. S'agissant de l'alternative produit, la méthode proposée par eux, viserait la préparation alimentaire d'un ersatz de foie gras dit « faux gras » obtenu par mélange de foie de palmipède maigre et de graisse animale. Il n'est pas du tout sûr qu'un tel produit réponde à l'attente des consommateurs, par ailleurs il peut se trouver chargé en graisses saturées qui sont comme on le sait des facteurs d'accroissement des risques de maladies cardiovasculaires humaines.

La deuxième méthode proposée par les opposants vise à obtenir un produit approchant les qualités organoleptiques d'un foie gras, identiques à celles d'un foie gras obtenu par les techniques actuelles de gavage, par la mise en application de méthodes de suralimentation naturelle du canard, totalement volontaire incluant notamment une augmentation de la concentration d'aliment, l'augmentation de l'appétit, le développement de l'alimentation réflexe, ou bien une combinaison de ces trois derniers points. Cependant on ne connaît actuellement aucun moyen permettant de parvenir à ces buts fixés et les recherches en ce sens, sont trop peu avancées pour que l'on puisse en dégager des solutions pertinentes et rapides à mettre en oeuvre.

### Exposé de l'invention

La présente invention vise à résoudre les problèmes de l'état de la technique en proposant une nouvelle méthode de nourrissage individualisée prenant en compte les besoins et l'état physiologique de chaque palmipède à nourrir afin d'augmenter leur bien être, réduire significativement la mortalité des palmipèdes et le risque de blessures lors du nourrissage tout en maintenant les qualités organoleptiques du foie gras obtenu à ce jour.

À cet effet, l'installation d'engraissement des palmipèdes, selon l'invention comprenant un local d'élevage avec moyens de climatisation par ventilation et/ou chauffage et/ou refroidissement, dans lequel local est formée au moins une aire d'élevage dans laquelle sont disposés plusieurs palmipèdes à engraisser, ladite installation comportant par ailleurs au moins une machine distributrice de nourriture pour palmipède comprenant un réservoir de nourriture, une pompe distributrice apte à puiser dans la réserve des rations de nourriture et distribuer ces rations par l'intermédiaire d'une conduite de distribution à un embuc de nourrissage prévu pour être intubé dans le jabot du palmipède à nourrir, se caractérise essentiellement en ce qu'elle comprend des moyens d'identification des palmipèdes, des moyens pour l'évaluation de l'état physiologique de chaque palmipède attestant de sa capacité à absorber une ration alimentaire et un système communiquant d'échange de ces informations entre les moyens d'évaluation et une unité de contrôle et de commande apte à agir sur la machine distributrice pour interdire ou limiter la distribution la ration alimentaire à ce palmipède si son état physiologique ne lui permet pas d'être nourri ou complètement nourri.

Ces dispositions établissent une réelle interactivité entre chaque palmipède et au moins la machine distributrice ce qui limite fortement la mortalité et les risques d'accident tout en améliorant les conditions d'engraissement. Ainsi la quantité de nourriture à distribuer à chaque palmipède peut être modulée, autour d'une valeur moyenne à partir des valeurs des paramètres physiologiques de l'animal et tenir ainsi compte de la capacité d'ingestion et de digestion et des capacités physiques de ce dernier, ces variables étant appréciées au travers de l'analyse des paramètres physiologiques et comportementaux du palmipède. Par ailleurs, ces dispositions permettent un parfais contrôle du degré de suralimentation de chaque palmipède. Ainsi chaque palmipède, de manière inconsciente, au travers de paramètres significatifs de son état physiologique et comportemental réalise un autocontrôle de manière interactive de sa ration alimentaire. On se rapproche ainsi d'une attitude d'engraissement naturelle adoptée par les palmipèdes sauvages, avant la migration. Il devient maintenant possible d'individualiser et d'adapter à chaque animal une courbe d'alimentation qui lui est propre et auto régulée par lui-même. Les animaux ne reçoivent plus une alimentation forcée mais une alimentation optimale. Le faible taux de mortalité obtenu prouve que cette nouvelle technique d'engraissement assure des conditions de « bien-être » se rapprochant de celles des animaux élevés pour la production de viande maigre, sachant que le taux de mortalité est un vrai critère objectif d'appréciation de la santé de l'élevage en général. Par ailleurs elle permet le développement optimal de chaque canard sans pour autant que ce dernier dépasse ses capacités physiques propres. De plus elle peut être adaptée en permanence aux conditions climatiques environnementales saisonnières et journalières.

Enfin cette interactivité permet notamment, pour ce qui concerne un palmipède dont l'état physiologique est dégradé, de générer une alarme afin que ce dernier soit éventuellement isolé par l'éleveur et placé dans une infirmerie.

Alternativement, selon une autre caractéristique de l'invention, dans la mesure où l'affection qui frappe le palmipède peut être identifiée, est déclenché un protocole de soins consistant à administrer au palmipède à l'aide de l'embuc de nourrissage, un produit curatif approprié ou bien de l'eau pour combattre par exemple une déshydratation.

À cette fin, selon une caractéristique additionnelle de l'invention, l'embuc de nourrissage présente une tubulure dédiée à l'introduction d'eau et de produit curatif.

Selon une autre caractéristique de l'invention, les moyens pour l'évaluation de l'état physiologique de chaque palmipède comprennent des moyens de mesure d'au moins un paramètre physiologique significatif de son état de santé. Ce paramètre, non limitativement, peut-être la température corporelle, et/ou le rythme cardiaque, et/ou la fréquence respiratoire, et/ou la valeur du PH dans le jabot, et/ou la valeur de la pression dans le jabot et/ou l'état du plumage.

Selon une autre caractéristique de l'invention, les moyens d'évaluation de l'état physiologique de chaque palmipède mettent en oeuvre l'analyse du comportement de ce dernier notamment son degré de mobilité soit par rapport à une période antérieure, par exemple la veille, soit par rapport aux autres palmipèdes ou soit encore par rapport à une courbe type préétablie. Cette disposition permet en outre d'identifier des problèmes de locomotion générés par exemple par des blessures aux pâtes. Il est également possible par ce biais de mesurer la fréquence d'abreuvement de chaque palmipède.

Selon une autre caractéristique de l'invention, la mesure du degré de mobilité du palmipède est effectuée par l'analyse d'une image donnée par une caméra que comporte l'installation, cette analyse étant opérée par un logiciel approprié, connu en soi, chargé dans un bloc mémoire de l'unité de contrôle et de commande.

Selon une autre caractéristique de l'invention, l'unité de contrôle et de commande est apte à agir sur les moyens de climatisation du local d'élevage afin de pouvoir modifier en permanence les conditions environnementales des palmipèdes en fonction des valeurs de leur paramètre physiologiques. Ainsi les valeurs des paramètres physiologiques ou comportementaux des animaux peuvent être utilisées pour réguler les paramètres climatiques du local d'élevage tels que température et ventilation de façon permanente et sans intervention humaine. Là encore, au travers des paramètres physiologiques, de manière inconsciente, les animaux élevés contrôlent et autorégulent les paramètres climatiques du local d'élevage.

Selon une autre caractéristique de l'invention, les valeurs des paramètres physiologiques mesurées sont comparées par l'unité de contrôle et de commande à des valeurs prédictives, inscrites dans une mémoire de l'unité de commande et de contrôle, ces valeurs prédictives étant corrélées à la durée écoulée de la période d'engraissement.

Ainsi un écart significatif entre les valeurs mesurées et les valeurs attendues peuvent révéler, s'agissant d'un individu, un état de santé déficient et s'agissant d'une population animale dans son ensemble, une mauvaise climatisation du local ou de l'aire d'élevage concernée.

Selon une autre caractéristique de l'invention, les valeurs prédictives sont majorées ou minorées par l'unité de contrôle et de commande en fonction des données climatiques du moment et/ou futures, externes au local, mesurées par une station météorologique.

Selon une autre caractéristique de l'invention, le moyen d'identification est un élément porté par le palmipède mais en variante, selon une autre caractéristique de l'invention, le moyen d'identification est constitué par une caméra connectée à l'unité de contrôle et de commande et par un logiciel de reconnaissance morphologique installé dans un bloc mémoire de l'unité de contrôle et de commande.

Selon une variante d'exécution, le moyen d'identification est constitué par une étiquette portant une couleur d'identification de l'animal et l'installation est dotée d'au moins une camera connectée à l'unité de contrôle et de commande et apte à lire la couleur de l'étiquette. Il y a lieu de noter que cette disposition, n'exige qu'un nombre limité de couleurs dans la mesure où les palmipèdes sont installés par lots dans des logements d'élevage dont la position dans le local d'élevage est parfaitement connue. Ainsi la position de chaque logement d'élevage sera un élément de l'identité du palmipède.

La disposition précédente oblige de déclarer les animaux au système, cette déclaration consistant pour l'essentiel à attribuer à chaque animal un numéro d'identification, sous forme décimale, une couleur et un emplacement dans le local d'élevage. Pour pallier cet inconvénient, le moyen d'identification, selon une variante d'exécution, est une étiquette portant un code-barres d'identification de l'animal et l'installation est équipée d'au moins un lecteur de code à barres connecté à l'unité de contrôle et de commande. Ainsi l'identité du palmipède ne dépendra plus de la position de logement d'élevage qui l'accueille.

Il peut s'avérer que dans certains cas que la lecture du code à barre ne puisse pas être opérée ou mal opérée. Ainsi, selon une variante d'exécution, le moyen d'identification est constitué par une puce électronique avec mémoire apte à recevoir un code d'identification et apte à être lue à distance par un récepteur connecté à l'unité de contrôle et de commande. Cette puce, selon une autre caractéristique de l'invention peut être installée dans une étiquette portée par le palmipède ou bien sera du type implantable sous la peau de l'animal.

Cette puce selon une caractéristique additionnelle de l'invention pourra être du type RFID. Cette disposition permet une communication par voie hertzienne entre la puce et un récepteur que comporte l'installation, ce récepteur étant connecté à l'unité de contrôle et de commande.

Il ya lieu de noter que par lecture des moyens d'identification et notamment des puces électroniques il est également possible de mesurer le degré de mobilité de chaque palmipède dans la mesure où ces dernières sont dotées de capteurs de mouvement.

Selon une autre caractéristique de l'invention, l'installation comporte au moins un moyen de monitorage apte à mesurer l'un ou moins des paramètres physiologiques du palmipède et à transmettre ce paramètre vers un récepteur dédié avec antenne connecté à l'unité de contrôle et de commande. Ce récepteur selon une autre caractéristique de l'invention peut être installé à poste fixe dans le local d'élevage ou bien être installé sur la distributrice de nourriture ou bien encore sur un support auto déplaçable dans le local d'élevage. Ce récepteur, par son antenne sera apte à recevoir les données contenues dans les mémoires du ou des moyens de monitorage. Dans le cas de moyen de monitorage à faible puissance d'émission ou d'éléments passifs, le récepteur par son antenne sera approché au plus près du moyen de monitorage à lire et l'énergie propre à réaliser l'émission lui sera communiquée par induction par l'intermédiaire de l'antenne.

Selon une première variante d'exécution, l'installation comporte plusieurs moyens de monitorage lesquels sont portés par les palmipèdes et intégrés ou associés aux puces électroniques d'identification. Ces puces pourront être implantées dans le corps de l'animal et les moyens de monitorage avec le bloc mémoire pour stocker les données mesurées, pourront être intégrés dans cette puce. Cette puce pourra aussi intégrer des capteurs de mouvement et un émetteur pour la transmission des données acquises. Le moyen de monitorage intégré dans la puce pourra être doté d'un capteur de pression et sera introduit sous la peau de l'animal au niveau de son jabot. On pourra par ce biais mesurer la pression du jabot.

En variante, le moyen de transmission et le détecteur de mouvement seront incorporés dans une étiquette portée par le palmipède, ce moyen de transmission sera apte à interroger la puce électronique enfin d'en lire les données qu'elle recèle.

La puce peut également être intégrée dans une étiquette sous forme de collier portée par le cou, une patte ou bien une aile de l'animal.

Alternativement, selon une autre variante d'exécution, les moyens de monitorage sont portés ou intégrés à l'embuc de nourrissage et ce dernier comporte un élément de transmission des données acquises, vers l'unité de contrôle et de commande. Cet élément de transmission peut être une antenne ou bien une liaison filaire.

Selon une autre caractéristique de l'invention, les moyens de monitorage mettent en oeuvre un capteur de sons, apte à détecter le rythme cardiaque. Alternativement, le rythme cardiaque peut être détecté par un capteur utilisant un accéléromètre.

Additionnellement, selon une autre caractéristique de l'invention, le ou chaque moyen de monitorage met en oeuvre un capteur de fréquence respiratoire ou d'halètement constitué par un détecteur de mouvement. Il y a lieu de noter que l'halètement constitue le moyen naturel de régulation de température du palmipède.

Le ou chaque moyen de monitorage, selon une autre disposition de l'invention, met en oeuvre un capteur de température apte à indiquer la température corporelle du palmipède. S'agissant d'un moyen de monitorage porté par l'embuc de nourrissage, le capteur de température sera apte à mesurer la température du palmipède_par exemple au niveau de son bec, soit par contact direct soit à distance par mesure de l'intensité de rayonnement infrarouge.

Un moyen de monitorage porté par l'embuc de nourrissage pourra intégrer avantageusement un capteur de la pression interne du jabot, un capteur de PH apte à mesurer le degré d'acidité du jabot, et une caméra endoscopique en lumière blanche ou en lumière infrarouge. Un embuc équipé de tels éléments est décrit dans la demande de brevet portant sur un « Embuc de nourrissage et machine distributrice le comportant » déposé ce même jour par les demandeurs.

Selon encore une autre caractéristique de l'invention, l'installation est équipée d'un système de géo-localisation de chaque palmipède dans le local.

Selon encore une autre caractéristique de l'invention, le support auto-déplaçable porte un moyen de ventilation de secours et/ou une caméra vidéo et/ou une caméra thermique.

### Description sommaire des figures et des dessins.

D'autres avantages, buts et caractéristiques de l'invention apparaîtront à la lecture de la description d'une forme préférée de réalisation, donnée à titre d'exemple non limitatif en se référant aux dessins annexés en lesquels :
- la figure 1 est vue schématique d'une installation selon l'invention,
- la figure 2 est une vue schématique d'une installation selon une seconde forme de réalisation,
- la figure 3 est une vue schématique d'une installation selon une troisième forme de réalisation,

### Meilleure manière de réaliser l'invention

Telle que représentée l'installation selon l'invention comprend un local 1 d'élevage équipé d'aires d'élevage 10 sous forme chacune d'un logement d'élevage sensiblement de forme parallélépipédique comportant des parois verticales ajourées ou grillagées déterminant un volume d'élevage apte à recevoir plusieurs palmipèdes. Il y a lieu de noter que le volume d'élevage est suffisant pour que les palmipèdes qui y sont logés puissent s'y ébattre sans contrainte et ce dans le respect des nouvelles normes européennes en vigueur.

On peut remarquer sur les figures jointes que les logements d'élevage 10 sont organisés en rangées parallèles régulièrement espacées afin de former entre elles des couloirs de circulation dans lesquels évolue au moins une machine 2 distributrice de nourriture en ration dosée comme par exemple celle décrite dans la demande de brevet pour « Potence de suspension d'un embuc de nourrissage et machine distributrice le comportant » déposée ce même jour par les demandeurs ainsi que celle décrite dans la demande de brevet pour « Embuc de nourrissage et machine distributrice le comportant » déposée ce même jour par les demandeurs.

On observe sur les figures jointes que le local d'élevage comporte au moins un moyen de climatisation 3 schématiquement représenté comportant un moyen de contrôle apte à maintenir l'atmosphère interne du local dans des conditions optimales. Ce moyen de climatisation 3 pourra être constitué de moyens de ventilation connus en soi et de moyen de chauffage et/ou de refroidissement de l'atmosphère du local.

L'installation selon l'invention comprend en outre une unité de contrôle et de commande 4 constituée avantageusement par un micro-ordinateur apte à commander et contrôler le moyen de climatisation ainsi que la machine distributrice de nourriture 2 et notamment la distribution de la ration alimentaire.

Cette machine distributrice comprend un réservoir de nourriture 20, une pompe distributrice 21 apte à puiser dans la réserve 20 des rations de nourriture et distribuer ces rations par l'intermédiaire d'une conduite de distribution 22 à un embuc de nourrissage 23 prévu pour être intubé dans le jabot du palmipède à nourrir. L'utilisateur pourra introduire dans la mémoire de la machine une valeur nominale relative à une quantité théorique à distribuer à chaque palmipède et cette quantité va être modifiée à savoir auto régulée par le palmipède, généralement la quantité distribuée sera inférieure à la quantité théorique.

Les palmipèdes sont disposés par lots dans les aires d'élevage 10 et sont dotés chacun d'un moyen d'identification qui peut être une étiquette portant un marquage distinctif soit une couleur, soit un code à barres.

Le moyen d'identification peut être constitué par une puce électronique dotée d'une mémoire pouvant être lue à distance dans laquelle est inscrit le code d'identification du palmipède. Cette puce peut être du type passif ou actif elle peut être introduite dans le corps de l'animal ou bien portée par une étiquette spécifique entourant soit le cou, l'une des pattes ou l'une des ailes de l'animal. Cette puce pourra être lue à distance par un récepteur 5 doté d'une antenne 50, ce récepteur étant connecté à l'unité de contrôle et de commande 4.

L'installation est de plus dotée d'au moins un moyen de monitorage adapté à mesurer au moins un paramètre physiologique significatif de l'état de santé du palmipède, ce paramètre pouvant être non limitativement la température corporelle, et/ou le rythme cardiaque, et/ou la fréquence respiratoire, et/ou la valeur du PH dans le jabot, et/ou la valeur de la pression dans le jabot et/ou l'état du plumage.

L'installation pourra comporter plusieurs moyens de monitorage auquel chacun de ces derniers sera porté par un palmipède. Dans ce cas de figure, le moyen de monitorage mesurera la température corporelle, le rythme cardiaque, la fréquence respiratoire ou la fréquence d'halètement et comportera à cette fin des capteurs appropriés. Le moyen de monitorage pourra intégrer un capteur de mouvement pour donner une indication sur le degré de mobilité de palmipède.

Alternativement, le moyen de monitorage sera porté par l'embuc de nourrissage 23. Dans ce cas de figure, le moyen de monitorage sera en outre doté d'un capteur de la pression interne du jabot de l'animal, d'un capteur de PH, d'une caméra endoscopique et d'un capteur de température. On pourra envisager également une solution selon laquelle les éléments des moyens de monitorage se répartissent entre d'une part des étiquettes portées par les palmipèdes et d'autre part l'embuc de nourrissage.

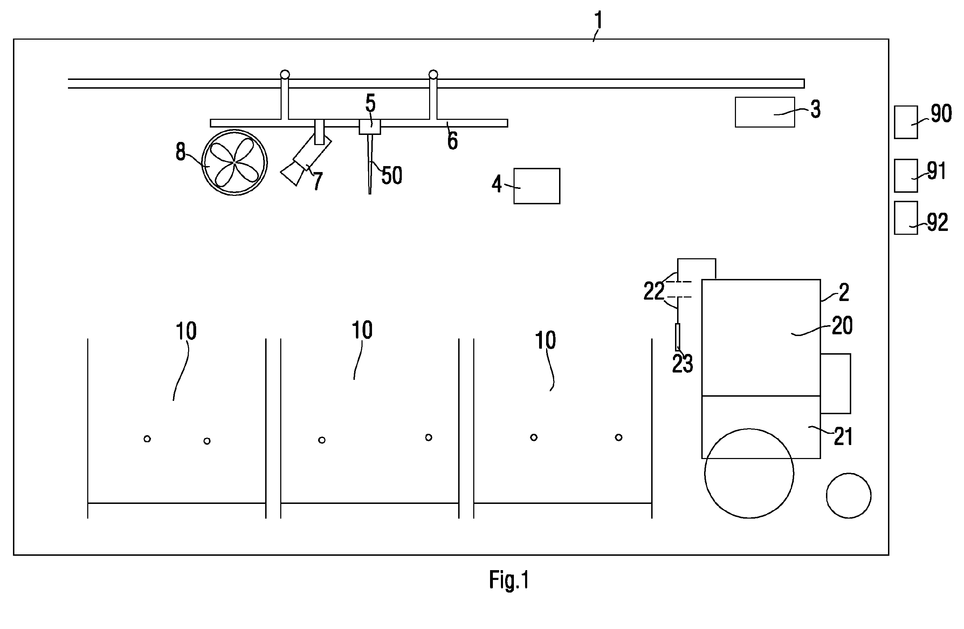

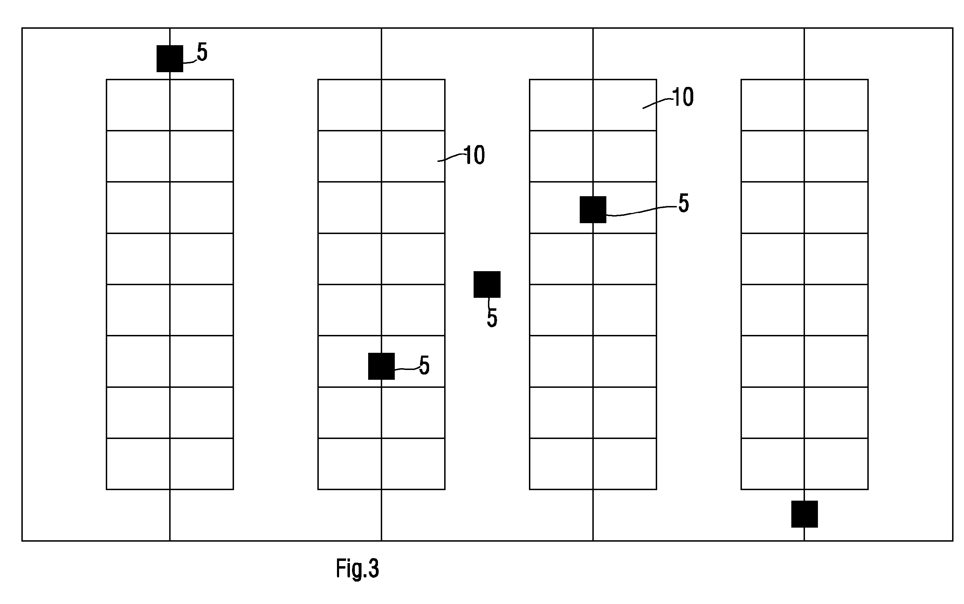

Les valeurs des paramètres mesurés par les moyens de monitorage seront inscrites en mémoire et transmises par voie hertzienne au récepteur 5. Dans ce dessein, l'embuc sera équipé d'une antenne appropriée. Pour ce qui concerne les moyens de monitorage et d'identification portés par les palmipèdes, la valeur des paramètres mesurés sera également transmise par voie hertzienne au récepteur 5. Si la puissance d'émission de ces derniers est trop faible, le récepteur 5 sera monté sur un support motorisé 6 déplaçable dans le local comme on peut le voir en figure 1 et 3. Par ce biais le récepteur pourra être amené au plus près des moyens de monitorage portés par les palmipèdes et pourra fournir à ces derniers, via son antenne 50, par induction, la puissance nécessaire à l'émission des données.

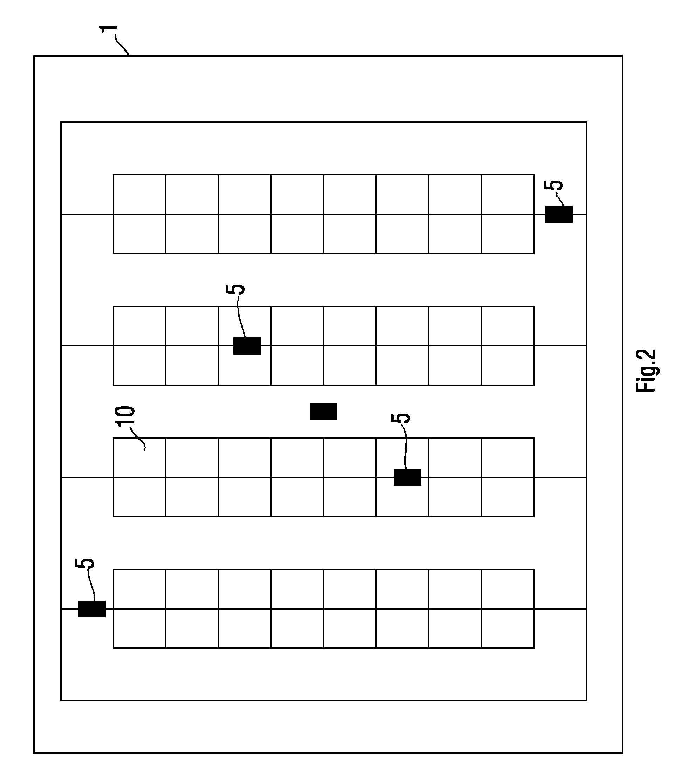

Si la puissance est suffisante, le récepteur pourra être installé à poste fixe dans le local comme le montre la figure 2. On peut voir sur cette figure que sont prévus plusieurs récepteurs 5 affectés respectivement aux différentes rangées de logement d'élevage.

Avec un ou des récepteurs 5 installé(s) à poste fixe, le palmipède pourra être équipé d'une étiquette portant un moyen de transmission apte à lire les mémoires de la puce d'identification et du moyen de monitorage et à les transmettre au récepteur 5.

En figure 3 on peut voir que l'installation comporte plusieurs récepteurs 5 montés sur des supports mobiles sur rails au-dessus des rangées des logements d'élevage.

L'installation telle que décrite sera dotée de moyen de marquage du palmipède qui vient d'être nourri. Ce marquage pourra mettre en oeuvre un tampon encreur et l'encre utilisée sera délébile et de qualité alimentaire. Ce moyen pourra être porté par l'embuc 23.

Le support mobile 6 comme le montre la figure 1 pourra être équipée d'une unité de ventilation 8 de secours et de caméra vidéo 7et/ou thermique.

L'unité de commande et de contrôle pour se connecter via des moyens de transmission appropriée du type internet ou GSM à une station météorologique 90. De même l'éleveur pourra se connecter à l'unité centrale 4 à l'aide d'un ordinateur portable 91 via le réseau internet ou bien via un téléphone mobile 92 du type GSM ou bien via d'autres moyens appropriés. Il pourra ainsi accomplir des tâches de vidéo surveillance et agir le cas échéant sur les moyens de contrôle de l'installation pour réguler par exemple les paramètres propres à la climatisation.

Enfin l'installation pourra être équipée de moyens de mesure de la capacité du jabot de chaque palmipède, ces moyens étant mis en oeuvre avant le premier nourrissage.

Il va de soi que la présente invention peut recevoir tous aménagements et variantes du domaine des équivalents techniques sans pour autant sortir du cadre du présent brevet.

## Revendications

1. Installation interactive d'engraissement des palmipèdes, comprenant un local d'élevage (1) avec moyens de climatisation (3) par ventilation et/ou chauffage et/ou refroidissement, dans lequel local est formée au moins une aire d'élevage (10) prévue pour recevoir plusieurs palmipèdes à élever, ladite installation comportant par ailleurs au moins une machine distributrice (2) de nourritures pour palmipède comprenant un réservoir de nourriture (20), une pompe distributrice (21) apte à puiser dans la réserve des rations de nourriture et distribuer ces rations par l'intermédiaire d'une conduite de distribution (22) à un embuc (23) de nourrissage prévu pour être intubé dans le jabot du palmipède à nourrir, **caractérisée en ce qu'**elle comprend des moyens d'identification des palmipèdes et des moyens pour l'évaluation de l'état physiologique et morphologique de chaque palmipède et de sa capacité à absorber une ration alimentaire et un système communiquant d'échange de ces informations entre les moyens d'évaluation et une unité de contrôle et de commande (4) apte à agir au moins sur la machine distributrice (2) pour interdire ou limiter la distribution la ration alimentaire à ce palmipède si son état physiologique ne lui permet pas d'être nourri ou complètement nourri.

2. Installation selon la revendication 1, **caractérisée en ce que** les moyens pour l'évaluation de l'état physiologique de chaque palmipède comprennent des moyens de mesure d'au moins un paramètre physiologique significatif de son état de santé.

3. Installation selon la revendication 1 ou la revendication 2, **caractérisée en ce que** les moyens d'évaluation de l'état physiologique de chaque palmipède mettent en oeuvre l'analyse du comportement de ce dernier notamment son degré de mobilité soit par rapport à une période antérieure, par exemple la veille, soit par rapport aux autres palmipèdes ou soit encore par rapport à une courbe type préétablie.

4. Installation selon la revendication précédente, **caractérisée en ce que** la mesure du degré de mobilité du palmipède est effectuée par l'analyse d'une image donnée par une caméra que comporte l'installation, cette analyse étant opérée par un logiciel approprié, chargé dans un bloc mémoire de l'unité de contrôle et de commande (4).

5. Installation selon l'une quelconque des revendications 2 à 4, **caractérisée en ce que** l'unité de contrôle et de commande (4) est apte à agir sur les moyens de climatisation (3) du local d'élevage afin de pouvoir modifier en permanence les conditions environnementales des palmipèdes en fonction des valeurs de leur paramètre physiologiques.

6. Installation selon l'une quelconque des revendications précédentes, **caractérisée en ce que** les valeurs des paramètres physiologiques mesurées sont comparées par l'unité de contrôle et de commande (4) à des valeurs prédictives, inscrites dans une mémoire de l'unité de commande et de contrôle (4).

7. Installation selon la revendication précédente, **caractérisée en ce que** les valeurs prédictives sont majorées ou minorées par l'unité de contrôle et de commande (4) en fonction des données climatiques du moment et/ou futures, externes au local mesurées par une station météorologique (90).

8. Installation selon l'une quelconque des revendications précédentes, **caractérisée en ce que** le moyen d'identification est constitué par une caméra connectée à l'unité de contrôle et de commande (4) et par un logiciel de reconnaissance morphologique installé dans un bloc mémoire de l'unité de contrôle et de commande.

9. Installation selon l'une quelconque des revendications 1 à 7, **caractérisée en ce que** le moyen d'identification est porté par le palmipède.

10. Installation selon la revendication précédente, **caractérisée en ce que** le moyen d'identification est constitué par une étiquette portant une couleur d'identification de l'animal et l'installation est dotée d'au moins une camera connectée à l'unité de contrôle et de commande (4) et apte à lire la couleur de l'étiquette.

11. Installation selon la revendication 9, **caractérisé en ce que** le moyen d'identification est une étiquette portant un code-barres d'identification de l'animal et ladite installation est équipée d'au moins un lecteur de code à barres connecté à l'unité de contrôle et de commande (4).

12. Installation selon la revendication 9, **caractérisée en ce que** le moyen d'identification est constitué par une puce électronique avec mémoire apte à recevoir un code d'identification et apte à être lue à distance par un récepteur connecté à l'unité de contrôle et de commande.

13. Installation selon la revendication précédente, **caractérisée en ce que** la puce est apte à être implantée dans le corps du palmipède.

14. Installation selon la revendication 12, **caractérisée en ce que** la puce est installée dans une étiquette portée par le palmipède.

15. Installation selon la revendication 13 ou la revendication 14, **caractérisée en ce que** la puce est du type RFID.

16. Installation selon l'une quelconque des revendications 12 à 15, **caractérisée en ce que** la puce électronique est équipée d'un capteur de mouvement.

17. Installation selon l'une quelconque des revendications 2 à 16, **caractérisée en ce qu'**elle comporte au moins un moyen de monitorage apte à mesurer l'un ou moins des paramètres physiologiques du palmipède et à transmettre ce paramètre vers un récepteur (5) dédié avec antenne (50), connecté à l'unité de contrôle et de commande.

18. Installation selon la revendication précédente, **caractérisée en ce qu'**elle comporte plusieurs moyens de monitorage portés par les palmipèdes et intégrés ou associés aux puces électroniques d'identification.

19. Installation selon la revendication 17, **caractérisée en ce que** le moyen de monitorage est intégré à l'embuc de nourrissage.

20. Installation selon les revendications 12 et 17 prises ensemble **caractérisée en ce que** le récepteur (5) est installé à poste fixe dans le local.

21. Installation selon les revendications 12 et 17 prises ensemble, **caractérisée en ce que** le récepteur (5) est installé sur support (6) déplaçable dans le local.

22. Installation selon la revendication 21, **caractérisée en ce que** le support (6) porte un moyen de ventilation de secours (8) et/ou une caméra vidéo (7) et/ou une caméra thermique.
